# EUROPEAN PATENT SPECIFICATION

(11) **EP 2 791 075 B1**
(45) Date of publication and mention of the grant of the patent: **10.05.2017**
(21) Application number: 12856952.2
(22) Date of filing: 12.12.2012
(51) Int. Cl.: C04B 41/00, C04B 41/64, B29K 33/00, C04B 26/06, C04B 14/04, C04B 111/54, C04B 26/18, B29C 67/24, C04B 41/48

(54) **METHOD OF MANUFACTURING A SYNTHETIC MARBLE WITH HIGH HARDNESS**
VERFAHREN ZUR HERSTELLUNG VON SYNTHETISCHEM MARMOR MIT HOHER HÄRTE
PROCÉDÉ DE FABRICATION D'UN MARBRE SYNTHÉTIQUE À DURETÉ ÉLEVÉE

(30) Priority: 13.12.2011 KR 20110133346
(43) Date of publication of application: 22.10.2014
(73) Proprietor: LG Hausys, Ltd., Youngdungpo-gu Seoul 07326 (KR)
(72) Inventor: SHIN, Sangho, Cheongwon-gun, Chungcheongbuk-do 28124 (KR)
(74) Representative: Goddar, Heinz J.
(86) International application number: PCT/KR2012/010812
(87) International publication number: WO 2013/089441

(56) References cited:
- CN-A- 1 096 016
- JP-A- H08 244 154
- JP-A- H09 110 502
- JP-A- S60 112 411
- JP-A- 2005 132 673
- JP-A- 2009 263 662
- KR-B1- 100 989 405

## Description

### [Technical Field]

The present invention relates to a method of manufacturing synthetic marble with high hardness, and more particularly, to a method of manufacturing synthetic marble with high hardness in which the raw material for the surface of a manufactured synthetic marble is silica because a step of coating a material of a high hardness, silica, on a sheet is included in the process of manufacturing the synthetic marble, so that the synthetic marble is not contaminated because it is not scratched due to the solid surface of high hardness, and is easy to clean.

### [Background Art]

In general, synthetic marble manufactured of acryl-based resin has been widely used as a material for counter tables and various kinds of interior decoration because it provides a beautiful appearance and excellent processability and is more lightweight than natural marble and has high strength. However, the synthetic marble has a problem in that it is easily contaminated due to a low surface hardness, and especially, it is difficult to clean due to contamination of scratched portions.

The acryl-based synthetic marble is generally manufactured through the steps of mixing filler, such as aluminum hydroxide, calcium carbonate, and silica, pigments, and a hardening agent to syrup which is made by mixing monomer, such as methylmethacrylate, and polymethyl methacrylate, and casting and hardening the mixture in a mold and a continuous steel belt.

In this instance, pigments and chips are used in order to show shapes and colors. The main ingredient of the chip is generally the same as the synthetic marble. After the chips are manufactured in the same process as the synthetic marble by putting a pigment of a single color, they are pulverized to thereby have various colors and particle sizes.

In prior arts, because the synthetic marble is manufactured by a method of sanding the surface after being casted, it needs additional process of coating the surface of the synthetic marble in order to increase the surface hardness. Accordingly, the synthetic marble according to the prior arts has a problem in that manufacturing expenses are increased.

Known from JPH08244154A is a synthetic marble having a surface layer with a filler of pencil hardness of at least 9 exhibited by acrylic resin compositions comprising 80 or 160 or 200 pts of SiO2 of sizes 10 µm or 30 µm as filler. This surface layer is coated onto a base layer made from a composition comprising 100 pts acrylic acid based syrup, 3 pts ethylene glycol dimethacrylate cross linking agent, 0,4 pts dodecyl mercaptan, 0,3 pts 2,4,4-trimethylpentyl peroxy neodecanoate cross linking promoter, 180 pts Al(OH)3 filler of pencil hardness 6. The synthetic marble is manufactured continuously starting with two premixed resinous components wherein the surface layer is firstly cast on a belt and while still being uncured is coated thickly with non surface layer before being cured in a oven. From CN1096016A and JPS60112411A it could be learned that the surface layer of a synthetic marble could be based on polyester resin

### [Disclosure]

### [Technical Problem]

Accordingly, the present invention has been made in an effort to solve the above-mentioned problems occurring in the prior arts, and it is an object of the present invention to provide a synthetic marble with scratch resistance and high hardness and a method of manufacturing the same.

The above and other objects, features and advantages of the present invention will be apparent from the following detailed description of the preferred embodiments of the invention in conjunction with the accompanying drawings.

### [Technical Solution]

The inventive solution with respect to the above problems results from the subject-matter of the independent claims. Preferred embodiments result from the sub-claims.

Described herein is a synthetic marble having a surface layer whose raw material is a compound with a pencil hardness of 7 to 9.

The present invention provides a method of manufacturing the synthetic marble comprising the steps of: (a) kneading the raw material of the synthetic marble; (b) making the kneaded material into a sheet; (c) putting and mulling sheets of at least two kinds in a kneader; (d) putting and mulling pearl pigments; (e) making the mulled material into a sheet; (f) coating a compound with a pencil hardness of 7 to 9 to the sheet; and (g) charging and casting the coated compound in a mold and removing the form and cooling the formed product.

### [Advantageous Effects]

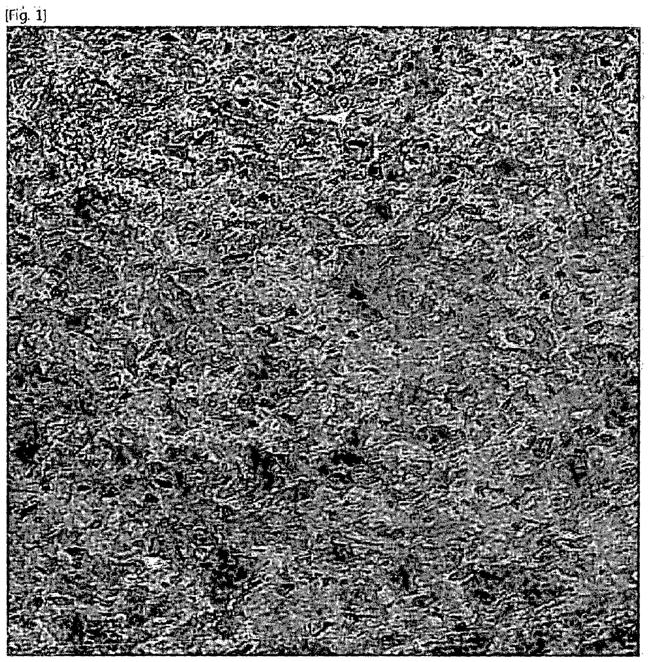

As shown in FIG. 1, the synthetic marble according to the present invention is coated and casted with a material consisting of silica with high hardness, so that it has a pencil hardness of 7H to 8H so as to secure scratch resistance and hardness greater than the existing casted products with hardness of 5H.

### [Description of Drawings]

FIG. 1 is a photograph of a synthetic marble panel according to a preferred embodiment of the present invention.

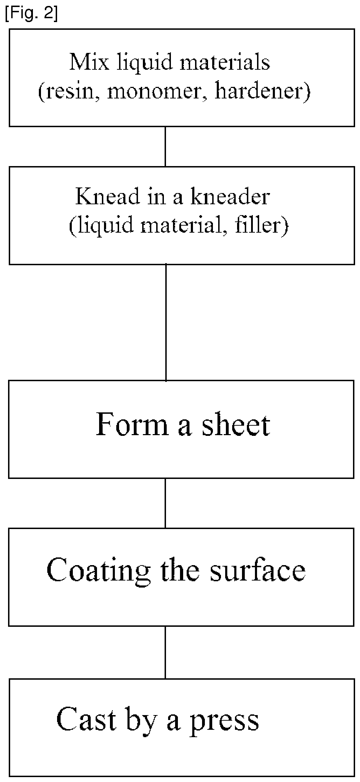

FIG. 2 is a flow chart of a manufacturing method of the synthetic marble according to the present invention.

### [Best Mode]

Reference will be now made in detail to an embodiment with reference to the attached drawings.

In a synthetic marble, a raw material of a surface layer is a compound with a pencil hardness of 7 to 9.

The compound with the pencil hardness of 7 to 9 is at least one selected from a group consisting of silica (in accordance with the invention) and silicon carbide.

It is preferable that the content of the compound with the pencil hardness of 7 to 9 is 50 parts by weight to 300 parts by weight with respect to 100 parts by weight of resin.

It is also preferable that the particle size of silica is 1µm to 30µm.

Moreover, a method of manufacturing the synthetic marble according to the present invention includes the steps of: (a) kneading the raw material of the synthetic marble; (b) making the kneaded material into a sheet; (c) putting and mulling sheets of at least two kinds in a kneader; (d) putting and mulling pearl pigments; (e) making the mulled material into a sheet; (f) coating a compound with a pencil hardness of 7 to 9 to the sheet; and (g) charging and casting the coated compound in a mold and removing the form and cooling the formed product.

The method of manufacturing the synthetic marble according to the present invention will be described in more detail. The method of manufacturing the synthetic marble includes the steps of: (a) kneading the raw material of the synthetic marble; (b) making the kneaded material into a sheet; (c) putting sheets of at least two kinds in a kneader and mulling the sheets in order to form a marble pattern in the compound state; (d) putting and mulling pearl pigments; (e) making the mulled material into a sheet; (f) thinly coating a compound with a pencil hardness of 7 to 9 to the sheet; (g) charging the coated compound in a mold; (h) casting the compound with a press; (i) removing the form of the casted product; (j) cooling the removed product; and (k) packing the cooled product.

In the (a) step of kneading the raw material, the reason for kneading the raw material is to increase viscosity of the material in order to realize the optimal conditions, and in the (b) step, the reason for making the kneaded material into the sheet is to easily charge and cast it in the mold.

The raw material of the synthetic marble in the (a) step consists of 200 to 500 parts by weight of an inorganic filler, 0.2 to 5 parts by weight of a cross linking agent, and 0.2 to 3 parts by weight of cross-linking promoter with respect to 100 parts by weight of acryl-based resin syrup consisting of 10 to 50% by weight of acryl-based resin and 50 to 90% by weight of acryl-based monomer.

It is preferable that a polymerable monomer of the acryl resin syrup used in the present invention is acryl monomer. In detail, the acryl resin syrup is a methacrylate monomer selected from or a compound of at least two selected from methyl methacrylate, ethyl methacrylate, butyl methacrylate, 2-ethylhexyl methacrylate, benzyl methacrylate, and glycidyl methacrylate, or a compound of the methacrylate monomer and a polymer that the methacrylate monomer is partially polymerized, and preferably, methyl methacrylate. It is preferable that the content of the polymer in the syrup is 10 to 50% by weight.

The inorganic filler used in the present invention is one selected from or a compound consisting of two or more materials selected from inorganic powders which are generally used in the field, such as aluminum hydroxide, magnesium hydroxide, calcium aluminate, calcium carbonate, silica powder, alumina, and so on. It is preferable that the particle size of the inorganic filler is 3 µm to 200µm, and it is preferable to have the surface treated with silane coupling agent, titanate coupling agent, or stearates in consideration of dispersibility of resin, improvement of mechanical strength of the product, and prevention of precipitation. A desirable content of the inorganic filler is 200 to 500 parts by weight with respect to 100 parts by weight of resin syrup. If the content of the inorganic filler is low, pearl is concentrated on one direction due to a difference of specific gravity, but if the content of the inorganic filler is too high, moldability and workability are deteriorated.

The cross linking agent used in the present invention is a multifunctional acryl-based monomer serving polymerable double link in molecules and cross link with the acryl resin syrup, and is one selected from or a compound consisting of two or more materials selected from ethylene glycol dimethacrylate, di (ethylene glycol) dimethacrylate, tetra (ethylene glycol) dimethacrylate, trimethylolpropane trimethacrylate, 1,6-hexanediol dimethacrylate, polybutylene glycol dimethacrylate, and neopentyl glycol dimethacrylate, and preferably, ethylene glycol dimethacrylate.

If the cross linking agents are not used or used too little, the surface is uneven, bubbles are formed at upper and lower parts of the synthetic marble due to a low binding force between the materials, and heat resistance and discoloration resistance are deteriorated. If the cross linking agents are used too much, there occur many problems in patterns of the synthetic marble due to a phase separation of the chips. Therefore, it is preferable that the content of the cross linking agent is 0.2 to 5 parts by weight with respect to 100 parts by weight of resin syrup. If the content of the cross linking agent is less than 0.2 parts by weight, the casting period of time becomes longer to thereby deteriorate productivity, and if the content of the cross linking agent is more than 5 parts by weight, cracks may be formed due to a sharp hardening.

The cross-linking promoter used in the present invention is one selected from or a compound consisting of two or more materials selected from diacyl peroxide such as benzoyl peroxide and dicumyl peroxide, hydro peroxide such as butylhydro peroxide and cumylhydro peroxide, t-butyl peroxy maleic acid, t-butylhydro peroxide, t-butylhydro peroxy butyrate, acetyl peroxide, lauroyl peroxide, azobisisobutyronitrile, azobisdimethylvalero nitrile, t-butyl peroxyneodecanoate, and t-amyl peroxy 2-ethylhexanoate. Moreover, polymerization and hardening may be carried out at room temperature using a mixture of amine peroxide and sulfonic acid or a mixture of peroxide and cobalt compound. It is preferable that the content of the cross-linking promoter is 0.2 to 3 parts by weight with respect to 100 parts by weight of resin syrup, and the cross-linking promoter is used together with polymerization promoter.

Moreover, a radical carrier such as a mercaptan compound of normal dodecyl mercaptan, tert-dodecyl mercaptan, benzyl mercaptan, and trimethyl benzyl mercaptan. It is preferable that the content of the radical carrier is 0.1 to 5 parts by weight with respect to 100 parts by weight of resin syrup.

Color-forming means used in the present invention is not specially restricted, and organic or inorganic paints or pigments which are generally known as ingredients for synthetic marble may be used. Furthermore, for pearl pigments, various pigments such as gold, silver, bronze, aluminum, pearl, and so on may be used.

Besides the above, as generally known additives for synthetic marble, the composite may further include one or more additive selected from: silicon-based or nonsilicon-based antifoaming agent; silane-based, acid-based or titanate-based coupling agent whose main ingredient is trimethoxysilane; phenyl salicylate-based, benzophenone-based, benzotriazole-based, nickel derivative-based, radical scavenger-based ultraviolet ray absorbent; halogen-based, phosphorus-based, or inorganic metal-based flame retardant; stearine-based or silicon-based releasing agent; catechol-based or hydroquinones-based polymerization inhibitor; and phenon-based, amine-based, quinone-based, sulfur-based, or phosphorus-based antioxidant.

In the casting step, casting pressure is 5 to 50kg/cm² and casting temperature is 30 to 150°C. If the casting pressure is less than 5kg/cm², the compound is not casted, and if the casting pressure is more than 50kg/cm², an excessive burr occurs.

The pencil hardness of the synthetic marble manufactured through the above manufacturing method is more than 7H, preferably, within a range of 7H to 8H.

### [Embodiment]

### 1. Manufacturing of Sheet

A resin pigment composite of a single color was manufactured by mixing 0.3 parts by weight of pigment to raw material slurry consisting of: 100 parts by weight of methylmethacrylate syrup including a compound consisting of 30% by weight of polymethyl methacrylate and 70% by weight of methyl methacrylate; 400 parts by weight of aluminum hydroxide; 0.2 parts by weight of t-butyl peroxyneodecanoate; 0.3 parts by weight of t-amyl peroxy 2-ethylhexanoate; 3 parts by weight of ethylene glycol dimethacrylate; 0.2 parts by weight of normal dodecyl mercaptan; 0.2 parts by weight of antifoamer, BYK 555 (BYK-Chemie Company, Germany), 0.75 parts by weight of coupling agent, BYK 900 (BYK-Chemie Company, Germany); and 0.2 parts by weight of ultraviolet ray absorbent, Hisorp-P (LG Chemicals).

### 2. Manufacturing of Synthetic Marble (according to the invention)

The compound manufactured into a sheet state was coated to a thickness of about 1mm using a roll coater. In this instance, the content of the materials for coating was 100 parts by weight of unsaturated polyester resin, 1.0 parts by weight of t-butylhydro peroxy butyrate, 100 parts by weight of silica as the filler, 10 parts by weight of zinc stearates as the releasing agent, and the materials were mixed together and coated. The coated sheet was charged in a mold preheated at temperature of 120°C and casted at pressure of 15kg/cm². After a removal of the form, the casted product was cooled to thereby obtain the synthetic marble with high hardness.

### 3. Evaluation

As described above, the raw material consisting of silica with solid surface of high hardness was coated and casted to thereby obtain the pencil hardness of 7H to 8H, so that the synthetic marble according to the present invention could secure scratch resistance and high hardness better than the existing casted products with hardness of 5H.

## Claims

1. A method of manufacturing a synthetic marble comprising the steps of:
(a) kneading the raw material of the synthetic marble;
(b) making the kneaded material into a sheet;
(c) putting and mulling sheets of at least two kinds in a kneader;
(d) putting and mulling pearl pigments;
(e) making the mulled material into a sheet;
(f) coating a mixture of 100 parts by weight of unsaturated polyester resin, 1,0 parts by weight of t-butyl hydroperoxy butyrate, 100 parts by weight of a compound with a pencil hardness of 7 to 9 which is silica, and 10 parts by weight of zinc stearates to the sheet; and
(g) charging and casting the coated compound in a mold, and removing the form, and cooling the formed product, wherein the casting pressure is 5 to 50 kg/cm² and casting temperature is 30 to 150°C.

2. The method of manufacturing the synthetic marble according to claim 1, wherein in the (a) step, the raw material of the synthetic marble consists of 200 to 500 parts by weight of an inorganic filler, 0.2 to 5 parts by weight of a cross linking agent, and 0.2 to 3 parts by weight of cross-linking promoter with respect to 100 parts by weight of acryl-based resin syrup consisting of 10 to 50% by weight of acryl-based resin and 50 to 90% by weight of acryl-based monomer.

3. The method of manufacturing the synthetic marble according to claim 2, wherein the acryl-based monomer is a methacrylate monomer selected from or a compound consisting of two or more materials selected from methyl methacrylate, ethyl methacrylate, butyl methacrylate, 2-ethylhexyl methacrylate, benzyl methacrylate, and glycidyl methacrylate, and the acryl-based resin is one or more polymers of the acryl-based monomers.

4. The method of manufacturing the synthetic marble according to claim 2, wherein the inorganic filler is at least one selected from aluminum hydroxide, magnesium hydroxide, calcium aluminate, calcium carbonate, silica powder, and alumina.

5. The method of manufacturing the synthetic marble according to claim 2, wherein the cross linking agent is one selected from or a compound consisting of two or more materials selected from ethylene glycol dimethacrylate, di (ethylene glycol) dimethacrylate, tetra (ethylene glycol) dimethacrylate, trimethylolpropane trimethacrylate,
1,6-hexanediol dimethacrylate, polybutylene glycol dimethacrylate, and neopentyl glycol dimethacrylate.

6. The method of manufacturing the synthetic marble according to claim 2, wherein the cross-linking promoter is one selected from or a compound consisting of two or more materials selected from benzoyl peroxide, dicumyl peroxide, butylhydro peroxide, cumylhydro peroxide, t-butyl peroxy maleic acid, t-butylhydro peroxide, t-butylhydro peroxy butyrate, acetyl peroxide, lauroyl peroxide, azobisisobutyronitrile, azobisdimethylvalero nitrile, t-butyl peroxy-neodecanoate, and t-amyl peroxy 2-ethythexanoate.

## Patentansprüche

1. Verfahren zum Herstellen eines künstlichen Marmors, umfassend die Schritte:
(a) Kneten des Rohmaterials des synthetischen Marmors;
(b) Ausbilden des gekneteten Materials in eine Platte;
(c) Einführen und Vermengen von Platten von wenigstens zwei Arten in einem Kneter;
(d) Einführen und Vermengen von Perlpigmenten;
(e) Ausbilden des vermengten Materials in eine Platte;
(f) Beschichten einer Mischung von 100 Gewichtsteilen eines ungesättigten Polyesterharzes, 1,0 Gewichtsteilen von t-Butylhydroperoxybutyrat, 100 Gewichtsteilen einer Verbindung mit einer Bleistifthärte von 7 bis 9, die Silica ist, und 10 Gewichtsteilen Zinkstearaten zu der Platte; und
(g) Beladen und Verteilen der beschichteten Verbindung in eine Gießform und Entfernen der Form, und Kühlen des geformten Produkts, wobei der Verteildruck 5 bis 50 kg/cm² und die Verteiltemperatur 30 bis 150°C ist.

2. Verfahren zum Herstellen des synthetischen Marmors nach Anspruch 1, wobei im Schritt (a) das Rohmaterial des synthetischen Marmors aus 200 bis 500 Gewichtsteilen an anorganischem Füllstoff, 0,2 bis 5 Gewichtsteilen eines Vernetzungsmittels und 0,2 bis 3 Gewichtsteilen eines Vernetzungsförderers, in Bezug auf 100 Gewichtsteile eines Harzsirups auf Acrylbasis bestehend aus 10 bis 50 Gew.-% eines Harzes auf Acrylbasis und 50 bis 90 Gew.-% eines Monomers auf Acrylbasis, besteht.

3. Verfahren zum Herstellen des synthetischen Marmors nach Anspruch 2, wobei das Monomer auf Acrylbasis ein Methacrylatmonomer ist, das ausgewählt wird aus einer Verbindung bestehend aus zwei oder mehr Materialien ausgewählt aus Methylmethacrylat, Ethylmethacrylat, Butylmethacrylat, 2-Ethylhexylmethacrylat, Benzylmethacrylat und Glycidylmethacrylat, und wobei das Harz auf Acrylbasis ein oder mehrere Polymere der Monomere auf Acrylbasis ist.

4. Verfahren zum Herstellen des synthetischen Marmors nach Anspruch 2, wobei der anorganische Füllstoff wenigstens einer ist, der ausgewählt wird aus Aluminiumhydroxid, Magnesiumhydroxid, Calciumaluminat, Calciumcarbonat, Siliziumoxidpulver und Aluminiumoxid.

5. Verfahren zum Herstellen des synthetischen Marmors nach Anspruch 2, wobei das Vernetzungsmittel eines ist, das ausgewählt wird aus einer Verbindung bestehend aus zwei oder mehr Materialien ausgewählt aus Ethylenglykoldimethacrylat, Di(ethylenglykol)dimethacrylat, Tetra(ethylenglykol)dimethacrylat, Trimethylolpropantrimethacrylat, 1,6-Hexandioldimethacrylat, Polybutylenglykoldimethacrylat und Neopentylglycoldimethacrylat.

6. Verfahren zum Herstellen des synthetischen Marmors nach Anspruch 2, wobei der Vernetzungsförderer einer ist, der ausgewählt wird aus einer Verbindung bestehend aus zwei oder mehr Materialien ausgewählt aus Benzoylperoxid, Dicumylperoxid, Butylhydroperoxid, Cumylhydroperoxid, t-Butylperoxymaleinsäure, t-Butylhydroperoxid, t-Butylhydroperoxybutyrat, Acetylperoxid, Lauroylperoxid, Azobisisobutyronitril, Azobisdimethylvaleronitril, t-Butylperoxyneodecanoat und t-Amylperoxy-2-ethylhexanoat.

## Revendications

1. Procédé de préparation d'un marbre synthétique comprenant les étapes consistant à :
(a) pétrir la matière première du marbre synthétique ;
(b) transformer la matière pétrie en une feuille ;
(c) mettre et malaxer des feuilles d'au moins deux types dans un malaxeur ;
(d) mettre et malaxer des pigments nacrés ;
(e) produire une feuille à partir de la matière malaxée ;
(f) enduire un mélange de 100 parties en poids de résine polyester insaturée, 1,0 parties en poids de butyrate d'hydroperoxyde de t-butyl, 100 parties en poids d'un composant ayant une dureté au crayon de 7 à 9 qui est la silice, et 10 parties en poids de stéarates de zinc à la feuille ; et
(g) charger et mouler le composé enduit dans un moule et retirer la forme,
et refroidir le produit formé, la pression de moulage étant de 5 à 50 kg/cm² et la température de moulage étant de 30 à 150 °C.

2. Procédé de fabrication du marbre synthétique selon la revendication 1, dans lequel à l'étape (a), la matière première du marbre synthétique se compose de 200 à 500 parties en poids d'une charge inorganique, de 0,2 à 5 parties en poids d'un agent de réticulation, et de 0,2 à 3 parties en poids d'un promoteur de réticulation par rapport à 100 parties en poids d'un sirop de résine à base d'acryle se composant de 10 à 50 % en poids de résine à base d'acryle et de 50 à 90 % en poids de monomère à base d'acryle.

3. Procédé de fabrication du marbre synthétique selon la revendication 2, dans lequel le monomère à base d'acryle est un monomère de méthacrylate sélectionné parmi, ou un composé constitué de, deux ou plus matières sélectionnées parmi le méthacrylate de méthyle, le méthacrylate d'éthyle, le méthacrylate de butyle, le méthacrylate de 2-éthylhexyle, le méthacrylate de benzyle, et le méthacrylate de glycidyle, la résine à base d'acryle étant un ou plusieurs polymères des monomères à base d'acryle.

4. Procédé de fabrication du marbre synthétique selon la revendication 2, dans lequel la charge inorganique est au moins une charge sélectionnée parmi l'hydroxyde d'aluminium, l'hydroxyde de magnésium, l'aluminate de calcium, le carbonate de calcium, la poudre de silice et l'alumine.

5. Procédé de fabrication du marbre synthétique selon la revendication 2, dans lequel l'agent de réticulation est sélectionné parmi, ou un composé constitué de, deux ou plusieurs matières sélectionnées parmi le diméthacrylate d'éthylène glycol, le diméthacrylate de di(éthylène glycol), le diméthacrylate de tétra(éthylène glycol), le triméthacrylate de triméthylolpropane, le diméthacrylate de 1,6-hexanediol, le diméthacrylate de polybutylène glycol, et le diméthacrylate de néopentyle glycol.

6. Procédé de fabrication du marbre synthétique selon la revendication 2, dans lequel le promoteur de réticulation est sélectionné parmi, ou un composé constitué de, deux ou plusieurs matières sélectionnées parmi le péroxyde de benzoyle, le péroxyde de dicumyle, l'hydropéroxyde de butyle, l'hydropéroxyde de cumyle, l'acide péroxy-maléïque, l'hydropéroxyde de t-butyle, le butyrate d'hydropéroxyde de t-butyle, le péroxyde d'acétyle, le péroxyde de lauroyle, l'azobisisobutyronitrile, l'azobisdiméthylvaléronitrile, Le néodécanoate de péroxyde de t-butyle, et le 2-éthythexanoate de péroxyde de t-amyle.
